(19) Europäisches Patentamt
European Patent Office
Office européen des brevets

(11) **EP 3 244 981 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(21) Anmeldenummer: **16700386.2**

(22) Anmeldetag: **13.01.2016**

(51) Int Cl.:
***A63G 31/16*** *(2006.01)*

(86) Internationale Anmeldenummer:
**PCT/EP2016/000050**

(87) Internationale Veröffentlichungsnummer:
**WO 2016/113134 (21.07.2016 Gazette 2016/29)**

(54) **FAHRGESCHÄFT MIT ROBOTERANORDNUNG**

AMUSEMENT RIDE HAVING A ROBOT ASSEMBLY

MOYEN DE DÉPLACEMENT AVEC UN SYSTÈME ROBOTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2015 DE 202015000333 U**

(43) Veröffentlichungstag der Anmeldung:
**22.11.2017 Patentblatt 2017/47**

(73) Patentinhaber: **KUKA Deutschland GmbH
86165 Augsburg (DE)**

(72) Erfinder:
• **FORNOFF, Peter
83071 Stephanskirchen (DE)**
• **TILLMANN, Axel
86316 Friedberg (DE)**

(74) Vertreter: **Schlotter, Alexander Carolus Paul
Wallinger Ricker Schlotter Tostmann
Patent- und Rechtsanwälte Partnerschaft mbB
Zweibrückenstrasse 5-7
80331 München (DE)**

(56) Entgegenhaltungen:
**EP-A1- 1 901 150       EP-A2- 0 997 176
EP-A2- 1 437 162       DE-A1-102011 083 596
DE-A1-102012 010 856**

**Beschreibung**

Die vorliegende Erfindung betrifft ein Fahrgeschäft mit einer Roboteranordnung.

Aus der EP 1 437 162 A2 ist ein Fahrgeschäft mit einem mehrgliedrigen Roboterarm bekannt, der eine Passagieraufnahme zum Transportieren mehrerer Personen aufweist.

Die DE 10 2012 010 856 A1 offenbart ein Steuermittel zur Überwachung einer Roboteranordnung mit wenigstens einem Roboter, wobei ein zu überwachender Raum vorgegeben und überwacht wird, der mittels einer triangulierten Oberfläche definiert wird.

Eine Aufgabe der vorliegenden Erfindung ist es, ein gattungsgemäßes Fahrgeschäft, insbesondere dessen Betrieb, zu verbessern.

Diese Aufgabe wird insbesondere durch ein Fahrgeschäft mit den Merkmalen des Anspruchs 1 oder durch ein hier beschriebenes Verfahrens gelöst. Anspruch 14 stellt ein Computerprogrammprodukt zur Durchführung eines hier beschriebenen Verfahrens nach einem Aspekt der vorliegenden Erfindung unter Schutz. Die Unteransprüche betreffen vorteilhafte Weiterbildungen.

Nach einem Aspekt der vorliegenden Erfindung weist ein Fahrgeschäft eine Roboteranordnung mit einem oder mehreren mehrgliedrigen Roboterarmen mit je einer Basis und einer Passagieraufnahme zum Transportieren einer oder mehrerer Person und eine Steuerung zum Steuern der Roboteranordnung auf.

Unter einem Fahrgeschäft wird vorliegend insbesondere ein System bzw. eine Anordnung bzw. Vorrichtung zur Belustigung von Personen, insbesondere in Freizeitparks oder dergleichen, verstanden.

In einer Ausführung weisen ein oder mehrere Roboterarme der Roboteranordnung jeweils zwei, drei, vier, fünf, sechs oder mehr gelenkig, insbesondere dreh- bzw. schwenkbar, miteinander verbundene Glieder auf.

Die Steuerung kann eine zentrale Steuerung zum, insbesondere koordinierten, Steuern mehrerer Roboterarme der Roboteranordnung sein. Gleichermaßen kann die Steuerung auch mehrere Einzelsteuerungen zum Steuern je eines Roboterarms der Roboteranordnung aufweisen. Nach einem Aspekt ist die Steuerung, insbesondere hard- und/oder softwaretechnisch, zur Durchführung eines hier beschriebenen Verfahrens eingerichtet.

In einer Ausführung weist wenigstens eine der Passagieraufnahmen einen Sitz und/oder ein Fixiermittel, insbesondere einen Gurt, Bügel oder dergleichen, zum Fixieren von Personen, und/oder einen Rahmen, insbesondere Käfig, zur Aufnahme und/oder zum Schutz von Personen auf. In einer Ausführung ist wenigstens eine der Passagieraufnahmen eine Passagiergondel.

In einer Ausführung wird eine Grenze einer Arbeitsraumanordnung mit einem oder mehreren Arbeitsräumen vorgegeben, insbesondere vor und/oder während des Betriebs bzw. einer Bewegung der Roboteranordnung abgespeichert. Entsprechend weist in einer Ausführung die Steuerung ein Speichermittel zum Speichern der Grenze der Arbeitsraumanordnung auf.

Die Grenze kann zusammenhängend sein oder mehrere voneinander beabstandete Abschnitte, insbesondere (Teil)Grenzen von mehreren nicht zusammenhängenden Arbeitsräumen der Arbeitsraumanordnung aufweisen. In einer Ausführung werden bzw. sind Parameter, welche die Grenze definieren, insbesondere Koordinaten, vorgegeben, insbesondere abgespeichert.

In einer Ausführung wird, insbesondere während des Betriebs bzw. einer Bewegung der Roboteranordnung, ein Abstand einer oder mehrerer der Passagieraufnahmen zu der Arbeitsraumanordnung, insbesondere ihrer Grenze, ermittelt. Entsprechend weist in einer Ausführung die Steuerung ein Abstandsmittel zum Ermitteln des Abstands, insbesondere während des Betriebs bzw. einer Bewegung der Roboteranordnung, auf.

In einer Ausführung werden, insbesondere während des Betriebs bzw. einer Bewegung der Roboteranordnung, maximal zulässige Bewegungskomponenten in zwei oder allen drei Raumrichtungen in Abhängigkeit von dem ermittelten Abstand ermittelt. Entsprechend weist in einer Ausführung die Steuerung ein Sicherheitsmittel zum Ermitteln der maximal zulässigen Bewegungskomponenten in den zwei oder drei Raumrichtungen, insbesondere während des Betriebs bzw. einer Bewegung der Roboteranordnung, auf.

Eine Bewegungskomponente in einer Raumrichtung kann insbesondere eine Geschwindigkeits- und/oder Beschleunigungskomponente in dieser Raumrichtung aufweisen, insbesondere sein. Eine Raumrichtung kann insbesondere eine kartesische Raumrichtung des (euklidischen) Raums bzw. der Umgebung des Fahrgeschäfts, insbesondere eine Achse eines umgebungsfesten kartesischen Koordinaten- bzw. Interialsystems sein. Gleichermaßen kann eine Raumrichtung auch eine Richtung eines bewegten, insbesondere roboteranordnungs-, insbesondere passagieraufnahmefesten kartesischen oder natürlichen Koordinatensystems sein, wobei ein natürliches Koordinatensystem in fachüblicher Weise durch den Tangential-, Normalen- und Binormalenvektor an eine Bewegungsbahn der Roboteranordnung, insbesondere Passagieraufnahme, gebildet sein kann, wobei der Tangentialvektor mit der aktuellen Geschwindigkeit und der Normalenvektor mit der aktuellen Beschleunigung fluchten und der Binormalenvektor mit diesen ein Orthonormalsystem bildet. Gleichermaßen kann eine Raumrichtung auch eine Richtung eines Polar- oder Zylinderkoordinatensystems oder dergleichen sein.

Durch eine Ermittlung maximal zulässiger Bewegungskomponenten in Abhängigkeit vom Abstand zur Arbeitsraumanordnung kann in einer Ausführung vorteilhafte eine, insbesondere gefahrlose, Bewegungsmöglichkeit der Roboteranordnung bzw. Passagieraufnahme(n) bestimmt und so der Betrieb des Fahrgeschäfts, insbesondere dessen Sicherheit, verbessert werden.

In einer Ausführung wird wenigstens eine, insbesondere tatsächliche und/oder kommandierte bzw. auszuführende, Bewegungskomponente der Roboteranordnung in wenigstens einer der Raumrichtungen, insbesondere werden die, insbesondere tatsächlichen und/oder kommandierten bzw. auszuführenden, Bewegungskomponenten in den zwei oder drei Raumrichtungen, jeweils in Abhängigkeit von der ermittelten maximal zulässigen Bewegungskomponente in dieser Raumrichtung bzw. diesen Raumrichtung(en) reduziert, insbesondere jeweils auf diese ermittelte(n) maximal zulässige(n) Bewegungskomponente(n). Entsprechend weist in einer Ausführung die Steuerung ein Reduziermittel zum Reduzieren einer, insbesondere kommandierten, Bewegungskomponente der Roboteranordnung in einer oder mehreren der Raumrichtungen, insbesondere in allen Raumrichtungen, in Abhängigkeit von der ermittelten maximal zulässigen Bewegungskomponente in dieser bzw. der jeweiligen Raumrichtung, insbesondere zum Reduzieren auf diese ermittelte maximal zulässige Bewegungskomponente, auf.

Die Ermittlung der maximal zulässigen Bewegungskomponente(n) und in einer Weiterbildung die entsprechende Reduzierung der Bewegungskomponente(n) kann in einer Ausführung eine Vorwärts- und/oder Rückwärtstransformation zwischen dem euklidischen Raum und dem Gelenkkoordinaten-, insbesondere Gelenkwinkelraum der Roboteranordnung umfassen bzw. im euklidischen Raum oder dem Gelenkkoordinaten-, insbesondere Gelenkwinkelraum erfolgen. Entsprechend kann in einer Ausführung eine Reduzierung von Bewegungskomponenten der Roboteranordnung in einer oder mehreren der Raumrichtungen auch eine Reduzierung der diesen entsprechenden Bewegungskomponenten im Gelenkkoordinaten-, insbesondere Gelenkwinkelraum der Roboteranordnung umfassen, insbesondere sein.

In einer Ausführung weist das Abstandsmittel ein oder mehrere Positionsmittel zum Ermitteln einer Position und/oder Geschwindigkeit der Passagieraufnahme auf, die in einer Weiterbildung drahtlos oder drahtgebunden mit dem Sicherheitsmittel signalverbunden sind.

Ein Positionsmittel kann insbesondere ein roboteranordnungsfestes Positionsmittel, insbesondere zum Erfassen einer Gelenkstellung und/oder Bewegung bzw. Geschwindigkeit eines Gelenks der Roboteranordnung, insbesondere einen, insbesondere antriebs- oder getriebeseitigen relativen oder absoluten Resolver oder Encoder umfassen, insbesondere ein solcher sein. Hierdurch kann in einer Ausführung vorteilhaft die Position und/oder Geschwindigkeit sehr präzise bestimmt werden, insbesondere durch eine Vorwärtstransformation.

Zusätzlich oder alternativ kann ein (anderes) Positionsmittel ein umgebungsfestes Positionsmittel, insbesondere zum optischen Erfassen der Passagieraufnahme, insbesondere eine Kamera oder einen Tracker umfassen, insbesondere ein(e) solche(r) sein. Durch ein umgebungsfestes Positionsmittel kann in einer Ausführung direkt, durch ein roboteranordnungsfestes Positionsmittel indirekt bzw. mittels Vorwärtstransformation, eine Position der Passagieraufnahme und hieraus ein Abstand zu einem Arbeitsraum ermittelt werden.

Zusätzlich oder alternativ kann in einer Ausführung das Abstandsmittel ein oder mehrere, insbesondere optische, elektromagnetische, kapazitive und/oder Ultraschall-, Abstandssensoren aufweisen. Ein Abstandssensor kann insbesondere ein roboteranordnungsfester, insbesondere passagieraufnahmefester, Abstandssensor sein. Zusätzlich oder alternativ kann ein (anderer) Abstandssensor ein umgebungsfester Abstandssensor, insbesondere zum Erfassen eines Abstandes zu der Passagieraufnahme sein. Insbesondere, wenn ein Arbeitsraum durch eine Wandung bzw. Oberfläche oder in einem vorgegebenen Abstand hierzu definiert ist, kann ein Abstand zwischen der Passagieraufnahme und diesem Arbeitsraum durch einen roboteranordnungsfesten Abstandssensor zum Erfassen eines Abstandes zu der Wandung bzw. Oberfläche bzw. einen wandungs- bzw. oberflächenfesten Abstandssensor zum Erfassen eines Abstandes zu der Passagieraufnahme vorteilhaft ermittelt werden.

In einer Ausführung ist eine Bewegung der Roboteranordnung, insbesondere in einer entsprechenden manuellen Betriebsart, willkürlich durch eine Person wenigstens teilweise vorgebbar, insbesondere bezüglich einer Bahngeschwindigkeit oder einer freien Bewegung im Raum. Dies kann vorab und/oder während des Betriebs bzw. einer Bewegung der Roboteranordnung geschehen, insbesondere vorab durch den Passagier und/oder während des Betriebs bzw. einer Bewegung der Roboteranordnung durch einen Operator. Insbesondere hierzu weist in einer Ausführung die Steuerung ein umgebungsfestes Eingabemittel zum, insbesondere wenigstens teilweisen willkürlichen, Vorgeben einer Bewegung der Roboteranordnung auf. Zusätzlich oder alternativ kann dies auch während des Betriebs bzw. einer Bewegung der Roboteranordnung durch den Passagier geschehen. Insbesondere hierzu weist in einer Ausführung die Steuerung zusätzlich oder alternativ ein passagieraufnahmeseitiges Eingabemittel zum, insbesondere wenigstens teilweisen willkürlichen, Vorgeben einer Bewegung der Roboteranordnung auf. Das passagieraufnahmeseitige Eingabemittel kann insbesondere einen Steuerknüppel, einen Joystick, ein Lenkrad oder dergleichen aufweisen.

In einer Ausführung weist die Steuerung wenigstens eine Automatikbetriebsart auf bzw. ist dazu eingerichtet, in wenigstens einer Automatikbetriebsart betrieben zu werden bzw. zu operieren, insbesondere wahlweise zu der vorgenannten manuellen Betriebsart.

In einer Ausführung ist eine Automatikbetriebsart eine Automatikbetriebsart zum automatischen Abfahren einer vorgegebenen Bahn der Roboteranordnung mit einer vorgegebenen Geschwindigkeit. In der manuellen Betriebsart kann eine vorgegebene Bahn mit einer willkürlich vorgegebenen Geschwindigkeit abgefahren werden.

Zusätzlich oder alternativ kann eine Automatikbetriebsart eine (andere) Automatikbetriebsart zum automatischen Anfahren einer vorgegebenen Position der Passagieraufnahme sein, wobei in einer Weiterbildung an der vorgegebenen Position die Passagieraufnahme stillgesetzt oder wieder in die manuelle Betriebsart gewechselt werden kann bzw. die Steuerung hierzu eingerichtet ist.

In einer Weiterbildung wird eine Bahn, die die Roboteranordnung in der Automatikbetriebsart abfährt, wenigstens teilweise zufallsbasiert vorgegeben, insbesondere, indem ein oder mehrere die Bahn bestimmende Parameter zufällig, insbesondere mittels eines Zufallsgenerators, einer stochastischen Tabelle oder dergleichen, vorgegeben werden. Entsprechend weist in einer Ausführung die Steuerung ein Zufallsmittel zum zufallsbasierten Vorgeben der Bahn der Roboteranordnung auf. Zusätzlich oder alternativ kann die Bahn auf Basis eines Simulationsmodells vorgegeben werden. Entsprechend weist in einer Ausführung die Steuerung ein Simulationsmittel zum Vorgeben der Bahn der Roboteranordnung auf Basis eines Simulationsmodells auf. Hierdurch kann beispielsweise ein Flugbetrieb mit stochastischen Einflüssen bzw. Störungen simuliert werden.

In einer Ausführung ist die Basis wenigstens eines Roboterarms der Roboteranordnung umgebungs- bzw. intertialfest. Zusätzlich oder alternativ ist in einer Ausführung wenigstens eine (andere) Basis der Roboteranordnung beweglich.

Eine bewegliche Basis kann insbesondere schienengebunden sein. In einer Weiterbildung umfasst eine Energieversorgung der Roboteranordnung dann eine Schiene, insbesondere eine Tragschiene, auf der die Basis beweglich gelagert ist und/oder eine hiervon beabstandete Stromschiene. Gleichermaßen kann eine bewegliche Basis ein (nicht schienengebundenes) Fahrwerk aufweisen, wobei das Fahrwerk in einer Weiterbildung ein oder mehrere Raupen bzw. Ketten und/oder ein oder mehrere Räder aufweist, die in einer Weiterbildung bereift und/oder sogenannte Mecanum-Räder sein können. In einer Weiterbildung umfasst eine Energieversorgung der Roboteranordnung dann einen roboterarm-, insbesondere basis- oder fahrwerkfesten Energiespeicher, insbesondere elektrischen Akkumulator.

In einer Ausführung weist das Fahrgeschäft wenigstens eine Landezone, insbesondere Ladezone, insbesondere Beladezone, zum Besteigen und/oder Verlassen der Passagieraufnahme durch einen oder mehrere Passagiere bzw. Fahrgäste auf. In einer Weiterbildung weist die Landezone eine Standfläche für Passagiere auf. Diese Standfläche ist in einer Weiterbildung beweglich. Sie kann insbesondere in einer Ausführung vertikal und/oder horizontal verschiebbar und/oder drehbar sein. In einer Weiterbildung umfasst die Standfläche ein, insbesondere wenigstens teilweise horizontales, Förderband, das vorteilhaft ein Besteigen und/oder Verlassen der absolut bzw. inertial bewegten Passagieraufnahme ermöglicht, während diese relativ zum Förderband, wenigstens im Wesentlichen, ruht.

Zusätzlich oder alternativ weist die Landezone in einer Ausführung eine mit der Passagieraufnahme, insbesondere mechanisch und/oder elektrisch, verbindbare Eingriffseinrichtung auf, die Passagieraufnahme in einer Weiterbildung ein mit dieser Eingriffseinrichtung verbindbare Komplementäreinrichtung. Durch eine mechanisch, insbesondere form- und/oder reibschlüssig, mit der Passagieraufnahme, insbesondere ihrer Komplementäreinrichtung, verbundene Eingriffseinrichtung kann die Passagieraufnahme vorteilhafterweise gesichert werden, insbesondere zum Besteigen und/oder Verlassen. Durch eine elektrisch mit der Passagieraufnahme, insbesondere ihrer Komplementäreinrichtung, verbundene Eingriffseinrichtung kann vorteilhafterweise ein An- bzw. Abwesenheit der Passagieraufnahme detektiert werden.

In einer Ausführung werden bzw. sind ein oder mehrere Arbeitsräume der Arbeitsraumanordnung umgebungsfest vorgegeben. Hierdurch können insbesondere feste Hindernisse berücksichtigt werden, beispielsweise Wände, Decken, Böden, Zäune oder dergleichen. Zusätzlich oder alternativ werden bzw. sind in einer Ausführung ein oder mehrere Arbeitsräume der Arbeitsraumanordnung ortsveränderlich vorgegeben, insbesondere in Abhängigkeit von einer Position der Roboteranordnung oder unabhängig hiervon. Hierdurch können insbesondere bewegliche Hindernisse berücksichtigt werden, beispielsweise andere Roboterarme der Roboteranordnung, Fahrzeuge oder dergleichen.

In einer Ausführung wird bzw. ist für einen oder mehrere der Arbeitsräume der Arbeitsraumanordnung jeweils eine zulässige (Arbeitsraum)Geschwindigkeit, insbesondere in wenigstens einer Raumrichtung oder richtungsunabhängig, vorgegeben bzw. gespeichert, die in einer Weiterbildung höchstens 50 mm/s, insbesondere höchstens 25 mm/s beträgt. Dann wird in einer Weiterbildung die Bewegungskomponente der Roboteranordnung in wenigstens einer Raumrichtung, insbesondere die Bewegungskomponente in einer Richtung eines umgebungsfesten Interialsystems oder in Tangentialrichtung eines natürlichen roboteranordnungsfesten Koordinatensystems bzw. die Absolutgeschwindigkeit, auf diese zulässige Arbeitsraumgeschwindigkeit reduziert, wenn der Abstand der Passagieraufnahme zu diesem Arbeitsraum negativ ist bzw. die Passagieraufnahme sich wenigstens teilweise in diesem Arbeitsraum befindet. So kann in einer Ausführung vorteilhaft in einer Landezone eine maximale Arbeitsraumgeschwindigkeit eingehalten und so ein gefahrloses Besteigen und/oder Verlassen der Passagieraufnahme sichergestellt werden, oder gleichermaßen in einer Interaktionszone eine maximale Arbeitsraumgeschwindigkeit eingehalten und so ein gefahrloses Interagieren aus der Passagieraufnahme heraus ermöglicht werden. Entsprechend ist in einer Ausführung das Speichermittel zum Speichern einer zulässigen (Arbeitsraum)Geschwindigkeit innerhalb wenigstens eines Arbeitsraums der Arbeitsraumanordnung eingerichtet, in einer Weiterbildung das Reduziermittel zum Reduzieren einer, insbesondere tatsächlichen und/oder kommandierten bzw. auszuführenden, Bewegungskomponente der Roboteranordnung in einer oder mehreren der Raumrichtungen, insbesondere in allen Raumrichtungen, in Abhängigkeit von der gespeicherten zulässigen (Arbeitsraum)Geschwindigkeit, insbesondere zum Reduzieren auf diese.

Zusätzlich oder alternativ können in einer Ausführung ein oder mehrere der Arbeitsräume der Arbeitsraumanordnung für die Passagieraufnahme gesperrt bzw. ein Eintreten der Passagieraufnahme in diese Arbeitsräume verboten sein bzw. werden.

In einer Ausführung kann der ermittelte Abstand von der Passagieraufnahme zu der Arbeitsraumanordnung hin den Betrag und/oder die Richtung einer minimalen, insbesondere euklidische, Distanz bzw. Verbindungsgeraden zu einem oder mehreren Arbeitsräumen der Arbeitsraumanordnung aufweisen, insbesondere sein. Zusätzlich oder alternativ kann der ermittelte Abstand Abstandskomponenten in wenigstens zwei, insbesondere den drei, Raumrichtungen zu einem oder mehreren Arbeitsräumen der Arbeitsraumanordnung aufweisen. Unter einer Abstandskomponente wird vorliegend insbesondere in an sich bekannter Weise die Projektion des (kürzesten) Abstandsvektors auf die jeweilige Raumrichtung verstanden. Entsprechend bestimmen Betrag und Richtung der minimalen Distanz zusammen die Abstandskomponente in den drei Raumrichtungen und umgekehrt die Abstandskomponente in den drei Raumrichtungen Betrag und Richtung der minimalen Distanz. Der Abstand im Sinne der vorliegenden Erfindung kann somit insbesondere eine mehrdimensionale Größe sein, die insbesondere Abstandsvektoren, insbesondere beschrieben durch Betrag und Richtung oder ihre Komponenten in den Raumrichtungen, zu einem oder mehreren Arbeitsräumen der Arbeitsraumanordnung aufweisen kann. Der Abstand ist in einer Ausführung von der Passagieraufnahme zu der Arbeitsraumanordnung hin gerichtet bzw. positiv. Entsprechend kann der (gerichtete) Abstand insbesondere negativ sein, falls die Passagieraufnahme sich in der Arbeitsraumanordnung befindet.

In einer Ausführung ist das Sicherheitsmittel dazu eingerichtet, einen STOP0, STOP1 oder STOP 2 durchzuführen, falls der ermittelte Abstand und/oder wenigstens eine maximal zulässige Bewegungskomponente einen vorgegebenen Grenzwert unterschreitet. Bei einem STOP0 wird in einer Ausführung wenigstens ein Roboterarm der Roboteranordnung von einer Energieversorgung getrennt und durch einfallende Bremsen stillgesetzt. Bei einem STOP1 wird in einer Ausführung wenigstens ein Roboterarm der Roboteranordnung durch seine Antriebe bzw. motorisch stillgesetzt und anschließend von einer Energieversorgung getrennt, wobei zusätzlich Bremsen einfallen können. Bei einem STOP2 wird in einer Ausführung wenigstens ein Roboterarm der Roboteranordnung durch seine Antriebe bzw. motorisch stillgesetzt, ohne anschließend von einer Energieversorgung getrennt zu werden, wobei zusätzlich Bremsen einfallen können.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere das Fahrgeschäft betreiben kann.

In einer Ausführung kann eine maximal zulässige Bewegungskomponente gleich Null sein, in einer Weiterbildung kann eine maximal zulässige Bewegungskomponente auch negativ bzw. kleiner als Null sein. Hierdurch kann in Ausführung vorteilhaft eine zu der entsprechenden Raumrichtung gegensinnige Zwangsbewegung vorgegeben werden.

In einer Ausführung konvergiert ein Arbeitsraum auf eine Landezone hin, insbesondere monoton, vorzugsweise streng monoton, insbesondere trichterartig. Hierdurch kann in Ausführung die Landezone vorteilhaft, insbesondere teilmanuell bzw. -geführt, angefahren werden.

Weitere Vorteile und Merkmale ergeben sich aus den Unteransprüchen und den Ausführungsbeispielen. Hierzu zeigt, teilweise schematisiert, die einzige:

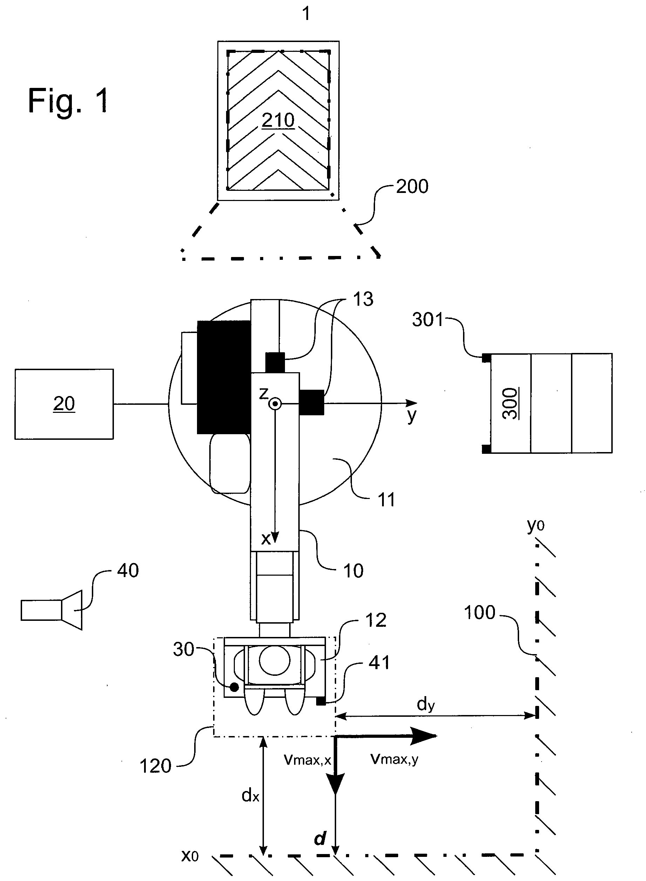

Fig. 1: ein Fahrgeschäft nach einer Ausführung der vorliegenden Erfindung.

Fig. 1 zeigt ein Fahrgeschäft nach einer Ausführung der vorliegenden Erfindung, das eine Roboteranordnung mit einem mehrgliedrigen Roboterarm in Form eines sechsachsigen Knickarmroboters 10 mit einer Basis 11 und einer Passagieraufnahme 12 zum Transportieren einer Person und eine Steuerung mit einem Steuerschrank 20 zum Steuern der Roboteranordnung aufweist.

Die Steuerung umfasst darüber hinaus ein passagieraufnahmeseitiges Eingabemittel in Form eines Joysticks 30 zum willkürlichen Vorgeben einer Bewegung der Roboteranordnung in einer manuellen Betriebsart.

Das Fahrgeschäft weist exemplarisch eine erste Landezone zum Besteigen und Verlassen der Passagieraufnahme 12 mit einer bewegliche Standfläche in Form eines Förderbandes 210 und eine zweite Landezone zum Besteigen und Verlassen der Passagieraufnahme 12 auf, die eine mit der Passagieraufnahme 12 mechanisch und elektrisch verbindbare Eingriffseinrichtung 310 aufweist.

Die Basis 11 ist im Ausführungsbeispiel umgebungsfest. In einer nicht dargestellten Abwandlung kann sie auch beweglich ausgebildet sein, insbesondere kann sie schienengebunden sein oder ein Fahrwerk aufweisen.

In einem Speichermittel in Form eines Speichers im Steuerschrank 20 ist bzw. wird eine Grenze einer Arbeitsraumanordnung mit zwei Arbeitsräumen 100, 200 gespeichert, welche in Fig. 1 fett strichpunktiert angedeutet ist.

Dabei ist der Arbeitsraum 100 ein gesperrter Arbeitsraum, der ortsveränderlich oder umgebungsfest sein kann, der Arbeitsraum 200 ein umgebungsfester Arbeitsraum, der trichterartig auf die erste Landezone 210 konvergiert.

In Fig. 1 sind drei kartesische Raumrichtungen x, y und z eines umgebungsfesten Interialsystems angedeutet. Die Arbeitsräume 100, 200 können durch ihre Koordinaten bezüglich dieses Interialsystems x, y, z definiert sein. Beispielsweise kann der gesperrte Arbeitsraum 100 durch die Vorschrift $x < x_0$ und $y < y_0$ definiert sein.

In dem Speichermittel ist bzw. wird eine zulässige (Arbeitsraum)Geschwindigkeit innerhalb des Arbeitsraums 200 gespeichert, die im Ausführungsbeispiel -50 mm/s in der x-Raumrichtung beträgt.

Die Steuerung umfasst roboterarmfeste Positionsmittel in Form von Resolvern oder Encodern 13 zum Ermitteln von Winkelpositionen und/oder-geschwindigkeiten des sechsachsigen Roboters 10, aus denen durch Vorwärtstransformation die Position der Passagieraufnahme 12, insbesondere eines sie umschreibenden Rahmens 120, in dem Inertialsystem x, y, z ermittelt wird. Zusätzlich oder alternativ kann die Steuerung umgebungsfeste Positionsmittel in Form von Kameras 40, Trackern oder dergleichen zum Ermitteln der Position der Passagieraufnahme 12, insbesondere des sie umschreibenden Rahmens 120, umfassen. Zusätzlich oder alternativ kann die Steuerung passagieraufnahmefeste Abstandssensoren 41 aufweisen.

Ein Abstandsmittel der Steuerung, welches die roboterarmfesten Positionsmittel 13, die umgebungsfesten Positionsmittel 40 und/oder die passagieraufnahmefesten Abstandssensoren 41 sowie eine entsprechend eingerichtete Verarbeitungseinheit im Steuerschrank 20 umfasst, ermittelt einen Abstand der Passagieraufnahme 12, insbesondere des sie umschreibenden Rahmens 120, zu der Arbeitsraumanordnung mit den Arbeitsräumen 100, 200 bzw. ist hierzu hard- und softwaretechnisch eingerichtet.

Dieser ermittelte Abstand kann insbesondere den Betrag und die Richtung eines minimalen Verbindungsvektors ***d*** von dem Rahmen 120 zu der Grenze des jeweiligen Arbeitsraums oder gleichermaßen dessen Abstandskomponenten in den Raumrichtungen x, y, z umfassen bzw. sein, wie dies in Fig. 1 exemplarisch für den gesperrten Arbeitsraum 100 und die Abstandskomponenten $d_x$ und $d_y$ angedeutet ist.

Am Beispiel dieses gesperrten Arbeitsraums 100 wird nachfolgend ein von der Steuerung ausgeführtes erfindungsgemäßes Verfahren näher erläutert, zu dessen Durchführung im Steuerschrank 20 ein Computerprogrammprodukt mit einem Programmcode vorgesehen ist, der auf einem von einem Computer lesbaren Medium gespeichert ist.

Der Abstand ist gerichtet, d.h. der Betrag des kürzesten Verbindungsvektors ***d*** von dem Rahmen 120 zu der Grenze des jeweiligen Arbeitsraums bzw. die entsprechenden Abstandskomponenten sind negativ bzw. kleiner Null, falls die Passagieraufnahme 12 sich wenigstens teilweise innerhalb des entsprechenden Arbeitsraums befindet.

Ein Sicherheitsmittel in Form einer entsprechend eingerichteten Verarbeitungseinheit im Steuerschrank 20 ermittelt in Abhängigkeit von diesem ermittelten Abstand maximal zulässige Bewegungskomponenten in den drei Raumrichtungen, wie dies in Fig. 1 exemplarisch für die maximal zulässige Geschwindigkeitskomponenten $v_{max, x}$ und $v_{max, y}$ in den Raumrichtungen x und y angedeutet ist.

Eine maximal zulässige Bewegungskomponente in einer Raumrichtung kann beispielsweise proportional zu der Abstandskomponente in dieser Raumrichtung sein, wie dies in Fig. 1 exemplarisch angedeutet ist, etwa in der Form

$$v_{max, x} = k \cdot d_x$$

$$v_{max, y} = k \cdot d_y$$

mit der Konstanten k.

Man erkennt, dass im Ausführungsbeispiel die maximal zulässige Geschwindigkeitskomponente sich mit Verringerung des Abstandes in der jeweiligen Raumrichtung verringert, bei Erreichen der Grenze gleich Null ist und bei Eindringen in den Arbeitsraum (d < 0) sogar negativ wäre bzw. die Passagieraufnahme aus dem Arbeitsraum treiben würde.

Ein Reduziermittel in Form einer entsprechend eingerichteten Verarbeitungseinheit im Steuerschrank 20 reduziert, insbesondere in der manuellen Betriebsart, in der der Passagier die Bewegung bzw. Geschwindigkeit der Passagieraufnahme 12 mit dem Joystick 30 kommandiert, die kommandierten Geschwindigkeitskomponenten auf die ermittelten maximal zulässigen Geschwindigkeitskomponenten in der entsprechenden Raumrichtung:

$$V_{soll,x} = \begin{cases} V_{joystick,x} \Leftrightarrow V_{joystick,x} < V_{max,x} \\ V_{max,x} \Leftrightarrow V_{joystick,x} \geq V_{max,x} \end{cases}$$

$$V_{soll,y} = \begin{cases} V_{joystick,y} \Leftrightarrow V_{joystick,y} < V_{max,y} \\ V_{max,y} \Leftrightarrow V_{joystick,y} \geq V_{max,y} \end{cases}$$

mit den durch den Joystick 30 kommandierten Geschwindigkeitskomponenten $v_{joystick,x}$, $v_{joystick,y}$ und den reduzierten kommandierten Geschwindigkeitskomponenten $v_{soll,x}$, $v_{soll,y}$.

Bezüglich des Arbeitsraums 200 operiert die Steuerung in prinzipiell analoger Weise, wobei hier der Arbeitsraum 200 nicht gesperrt, sondern in ihm die richtungsabhängige Maximalgeschwindigkeit von -50 mm/s in x-Richtung vorgegeben ist.

Ist der Abstand von dem Rahmen 120 zu der Grenze des Arbeitsraums 200 hin kleiner Null, d.h. ist die Passagieraufnahme 12 in den trichterartigen Arbeitsraum eingetreten, so wird die Geschwindigkeitskomponente in x-Richtung auf die Maximalgeschwindigkeit von -50 mm/s reduziert. Insbesondere kann der Passagier durch den Joystick 30 keine betragsmäßig größere Geschwindigkeit in negativer x-Richtung kommandieren. Zusätzlich oder alternativ kann vorgesehen sein, dass er auch keine Geschwindigkeitskomponente in positiver x-Richtung kommandieren kann, um keine zu große Relativgeschwindigkeit zum Förderband 210 zu generieren. In y-Richtung kann der Passagier durch den Joystick 30 nur Geschwindigkeitskomponenten kommandieren, die die Passagieraufnahme 12 innerhalb des trichterartigen Arbeitsraums 200 bewegen. Nähert sich die Passagieraufnahme 12 einem seitlich Rand (links, rechts in Fig. 1), so wird eine Seitbewegung über den Rand hinaus durch die abstandsabhängige Reduzierung der y-Geschwindigkeitskomponente auf Null verhindert.

Durch eine entsprechende Eingabe des Passagiers, eines Operators (nicht dargestellt) oder automatisch, beispielsweise nach Ablauf einer vorgegebenen Zeitdauer, schaltet die Steuerung in eine Automatikbetriebsart um, in der sie automatischen eine vorgegebene Position der Passagieraufnahme in der ersten oder zweiten Landungszone anfährt, wobei zufallsbasiert die ersten oder zweiten Landungszone angefahren wird. Zusätzlich oder alternativ kann die Steuerung in eine Automatikbetriebsart automatisch eine vorgegebene Bahn abfahren.

Auch während der manuellen Betriebsart kann die Steuerung eine Bahn zufallsbasiert vorgeben, beispielsweise, indem Reaktionen auf Kommandos des Joysticks 30 stochastisch verrauscht werden, zusätzliche stochastische Bewegungskomponenten aufgeprägt werden oder dergleichen, um beispielsweise Turbulenzen während eines Fluges oder dergleichen zu simulieren.

Das Sicherheitsmittel der Steuerung führt einen STOPO durch, falls der ermittelte Abstand und/oder wenigstens eine maximal zulässige Bewegungskomponente einen vorgegebenen Grenzwert unterschreitet.

Obwohl in der vorhergehenden Beschreibung exemplarische Ausführungen erläutert wurden, sei darauf hingewiesen, dass eine Vielzahl von Abwandlungen möglich ist. So kann insbesondere auch für die zweite Landungszone 300 ein weiterer Arbeitsraum vorgegeben bzw. gespeichert sein bzw. werden.

Die Ermittlung des Abstandes, der maximal zulässigen Bewegungskomponenten $v_{max,x}$ und $v_{max,y}$ in Abhängigkeit von dem ermittelten Abstand sowie die Reduzieren der Bewegungskomponenten $v_{soll,x}$ und $v_{soll,y}$ in Abhängigkeit von diesen ermittelten maximal zulässigen Bewegungskomponenten ist rein exemplarisch anhand eines zur kompakteren Darstellung sehr einfachen Beispiels erläutert, sie kann auch auf andere Weise erfolgen, beispielsweise durch eine andere funktionelle oder tabellarische Zuordnung von Abständen bzw. Abstandskomponenten, zulässigen Bewegungskomponenten und reduzierten kommandierten Bewegungskomponenten. So können nur beispielsweise die maximal zulässigen Bewegungskomponenten auch proportional zu dem Betrag d = |**d**| des Abstandsvektors **d** ermittelt werden

$$v_{max,x} = k \cdot d$$

$$v_{max,y} = k \cdot d$$

mit dem Betrag d = $\sqrt{(d_x + d_y + d_z)}$ und der Abstandskomponente $d_z$ in z-Richtung.

Entsprechend sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

| | |
|---|---|
| 10 | Roboterarm |
| 11 | Basis |
| 12 | Passagieraufnahme |
| 13 | Encoder/Resolver |
| 20 | Steuerschrank |

30   Joystick
40   Kamera
41   Abstandssensor
100, 200 Arbeitsraum
120   Passagieraufnahmerahmen
210   Förderband
300   Landungszone
301   Eingriffseinrichtung

**Patentansprüche**

1. Fahrgeschäft, aufweisend:

  eine Roboteranordnung mit wenigstens einem mehrgliedrigen Roboterarm (10) mit einer Basis (11) und einer Passagieraufnahme (12) zum Transportieren wenigstens einer Person; und eine Steuerung zum Steuern der Roboteranordnung, **dadurch gekennzeichnet, dass** die Steuerung aufweist:

   ein Speichermittel (20) zum Speichern einer Grenze einer Arbeitsraumanordnung mit wenigstens einem Arbeitsraum (100, 200); ein Abstandsmittel (13, 40, 41) zum Ermitteln eines Abstandes der Passagieraufnahme zu der Arbeitsraumanordnung; und ein Sicherheitsmittel (20) zum Ermitteln maximal zulässiger Bewegungskomponenten in wenigstens zwei Raumrichtungen (x, y, z) in Abhängigkeit von dem ermittelten Abstand.

2. Fahrgeschäft nach Anspruch 1, **dadurch gekennzeichnet, dass** die Steuerung ein Reduziermittel (20) zum Reduzieren einer Bewegungskomponente der Roboteranordnung in wenigstens einer Raumrichtung in Abhängigkeit von der ermittelten maximal zulässigen Bewegungskomponente in dieser Raumrichtung, insbesondere zum Reduzieren auf diese ermittelte maximal zulässige Bewegungskomponente, aufweist.

3. Fahrgeschäft nach einem der vorhergehenden Ansprüche, **dadurch gekennzeichnet, dass** das Abstandsmittel wenigstens ein, insbesondere roboteranordnungsfestes oder umgebungsfestes, Positionsmittel (13, 40) zum Ermitteln einer Position und/oder Geschwindigkeit der Passagieraufnahme und/oder wenigstens einen, insbesondere roboteranordnungsfesten, Abstandssensor (41) aufweist.

4. Fahrgeschäft nach einem der vorhergehenden Ansprüche, **dadurch gekennzeichnet, dass** die Steuerung ein, insbesondere passagieraufnahmeseitiges, Eingabemittel (30) zum, insbesondere willkürlichen, Vorgeben einer Bewegung der Roboteranordnung aufweist.

5. Fahrgeschäft nach einem der vorhergehenden Ansprüche, **dadurch gekennzeichnet, dass** die Steuerung eine Automatikbetriebsart zum automatischen Abfahren einer vorgegebenen Bahn der Roboteranordnung und/oder automatischen Anfahren einer vorgegebenen Position der Passagieraufnahme aufweist.

6. Fahrgeschäft nach dem vorhergehenden Anspruch, **dadurch gekennzeichnet, dass** die Steuerung ein Zufallsmittel (20) zum zufallsbasierten Vorgeben der Bahn der Roboteranordnung und/oder ein Simulationsmittel (20) zum Vorgeben der Bahn der Roboteranordnung auf Basis eines Simulationsmodells aufweist.

7. Fahrgeschäft nach einem der vorhergehenden Ansprüche, **dadurch gekennzeichnet, dass** die Basis (1) wenigstens eines Roboterarms der Roboteranordnung umgebungsfest oder beweglich ist.

8. Fahrgeschäft nach dem vorhergehenden Anspruch, **dadurch gekennzeichnet, dass** die beweglich Basis schienengebunden ist oder ein Fahrwerk aufweist.

9. Fahrgeschäft nach einem der vorhergehenden Ansprüche, **gekennzeichnet durch** eine Landezone zum Besteigen und Verlassen der Passagieraufnahme, die eine, insbesondere bewegliche, Standfläche (210, 300) und/oder eine mit der Passagieraufnahme, insbesondere mechanisch und/oder elektrisch, verbindbare Eingriffseinrichtung (301) aufweist.

10. Fahrgeschäft nach einem der vorhergehenden Ansprüche, **dadurch gekennzeichnet, dass** wenigstens ein Arbeitsraum (100, 200) der Arbeitsraumanordnung umgebungsfest und/oder wenigstens ein Arbeitsraum der Arbeitsraumanordnung ortsveränderlich vorgegeben ist.

11. Fahrgeschäft nach einem der vorhergehenden Ansprüche, **dadurch gekennzeichnet, dass** das Speichermittel (20) zum Speichern einer zulässigen Geschwindigkeit innerhalb wenigstens eines Arbeitsraums der Arbeitsraumanordnung eingerichtet ist.

12. Fahrgeschäft nach einem der vorhergehenden Ansprüche, **dadurch gekennzeichnet, dass** der ermittelte Abstand einen Betrag und/oder eine Richtung einer minimalen Distanz und/oder Abstandskomponenten in wenigstens zwei Raumrichtungen zu wenigstens einem Arbeitsraum der Arbeitsraumanordnung aufweist.

13. Fahrgeschäft nach einem der vorhergehenden Ansprüche, **dadurch gekennzeichnet, dass** das Sicherheitsmittel (20) dazu eingerichtet ist, einen STOPO, STOP1 oder STOP 2 durchzuführen, falls der ermittelte Abstand und/oder wenigstens eine maximal zulässige Bewegungskomponente einen vorgegebenen Grenzwert unterschreitet.

14. Computerprogrammprodukt mit einem Programmcode, der auf einem von einem Computer (20) lesbaren Medium (20) gespeichert ist, zur Durchführung eines Verfahrens zum Betreiben eines Fahrgeschäft nach einem der vorhergehenden Ansprüche, das die Schritte aufweist:

    Ermitteln des Abstandes der Passagieraufnahme (12) zu der Arbeitsraumanordnung (100, 200); und
    Ermitteln der maximal zulässigen Bewegungskomponenten in den wenigstens zwei Raumrichtungen (x, y, z) in Abhängigkeit von dem ermittelten Abstand.

**Claims**

1. A ride, comprising:

    a robot assembly with at least one multi-link robot arm (10) having a base (11) and a passenger receptacle (12) for transporting at least one person; and
    a controller for controlling the robot assembly, **characterized in that** the controller comprises:

        a storage means (20) for storing a boundary of a working space arrangement having at least one working space (100, 200);
        a distance means (13, 40, 41) for determining a distance of the passenger receptacle with respect to the working space arrangement; and
        a safety means (20) for determining maximum permissible motion components in at least two spatial directions (x, y, z) in dependence on the determined distance.

2. The ride according to claim 1, **characterized in that** the controller comprises a reduction means (20) for reducing a motion component of the robot assembly in at least one spatial direction in dependence on the determined maximum permissible motion component in this spatial direction, in particular for reduction to this determined maximum permissible motion component.

3. The ride according to any one of the preceding claims, **characterized in that** the distance means comprises at least one position means (13, 40), in particular a position means (13, 40) which is fixed with respect to the robot assembly or which is fixed with respect to the environment, for determining a position and/or a speed of the passenger receptacle, and/or at least one distance sensor (41), in particular a distance sensor (41) which is fixed with respect to the robot assembly.

4. The ride according to any one of the preceding claims, **characterized in that** the controller comprises an input means (30), in particular an input means (30) facing towards the passenger receptacle, for specifying a movement of the robot assembly, in particular for freely specifying a movement of the robot assembly.

5. The ride according to any one of the preceding claims, **characterized in that** the controller comprises an automatic mode of operation for automatically moving along a specified path of the robot assembly and/or for automatically approaching a specified position of the passenger receptacle.

6. The ride according to the preceding claim, **characterized in that** the controller comprises a random means (20) for randomly specifying the path of the robot assembly and/or a simulation means (20) for specifying the path of the robot assembly on the basis of a simulation model.

7. The ride according to any one of the preceding claims, **characterized in that** the base (1) of at least one robot arm of the robot assembly is fixed with respect to the environment or movable.

8. The ride according to the preceding claim, **characterized in that** the movable base is rail-bound or comprises a chassis.

9. The ride according to any one of the preceding claims, **characterized by** a landing zone for entering and leaving the passenger receptacle, which comprises a standing platform (210, 300), in particular a movable standing platform (210, 300) and/or an engagement device (301), which can be connected to the passenger receptacle, in particular mechanically and/or electrically.

10. The ride according to any one of the preceding claims, **characterized in that** at least one working space (100, 200) of the working space arrangement is fixed with respect to the environment and/or at least one working space of the working space arrangement is specified with a variable location.

11. The ride according to any one of the preceding claims, **characterized in that** the storage means (20) is arranged for storing a maximum permissible speed within at least one working space of the working space arrangement.

12. The ride according to any one of the preceding claims, **characterized in that** the determined distance comprises an absolute value and/or a direction of a minimum distance and/or distance components in at least two spatial directions with respect to at least one working space of the working space arrangement.

13. The ride according to any one of the preceding claims, **characterized in that** the safety means (20) is arranged to perform a STOP0, STOP1 or STOP2 if the determined distance and/or at least one maximum permissible motion component falls below a specified threshold.

14. A computer program product with a programming code which is stored on a medium (20) which can be read by a computer (20), for carrying out a method of operating a ride according to any one of the preceding claims, the method comprising the steps of:

> determining the distance of the passenger receptacle (12) to the working space arrangement (100, 200); and
> determining the maximum permissible motion components in the at least two spatial directions (x, y, z) in dependence on the determined distance.

**Revendications**

1. Moyen de déplacement, présentant :

> un système robotique avec au moins un bras de robot à plusieurs membres (10) avec une base (11) et un logement pour passager (12) pour le transport d'au moins une personne ; et
> une commande pour la commande du système robotique, **caractérisé en ce que** la commande présente :
>
>> un moyen de mémorisation (20) pour la mémorisation d'une limite d'un agencement d'espace de travail avec au moins un espace de travail (100, 200) ;
>> un moyen de distance (13, 40, 41) pour la détermination d'une distance entre le logement pour passager et l'agencement d'espace de travail ; et
>> un moyen de sécurité (20) pour la détermination de composantes de déplacement maximum admissibles dans au moins deux directions de l'espace (x, y, z) en fonction de la distance déterminée.

2. Moyen de déplacement selon la revendication 1, **caractérisé en ce que** la commande présente un moyen de réduction (20) pour la réduction d'une composante de déplacement du système robotique dans au moins une direction de l'espace en fonction des composantes de déplacement maximum admissibles déterminées dans cette direction de l'espace, en particulier pour la réduction à ces composantes de déplacement maximum admissibles déterminées.

3. Moyen de déplacement selon l'une quelconque des revendications précédentes, **caractérisé en ce que** le moyen de distance présente au moins un moyen de position (13, 40), en particulier solidaire au système robotique ou solidaire à l'environnement, pour la détermination d'une position et/ou vitesse du logement pour passager et/ou au moins un capteur de distance (41), en particulier solidaire au système robotique.

4. Moyen de déplacement selon l'une quelconque des revendications précédentes, **caractérisé en ce que** la commande présente un moyen de saisie (30), en particulier côté logement pour passager, pour la prédéfinition, en particulier arbitraire, d'un déplacement du système robotique.

5. Moyen de déplacement selon l'une quelconque des revendications précédentes, **caractérisé en ce que** la commande présente un mode de fonctionnement automatique pour le parcours automatique d'une trajectoire prédéfinie du système robotique et/ou l'approche automatique d'une position prédéfinie du logement pour passager.

6. Moyen de déplacement selon la revendication précédente, **caractérisé en ce que** la commande présente un moyen aléatoire (20) pour prédéfinir de façon aléatoire la trajectoire du système robotique et/ou un moyen de simulation (20) pour prédéfinir la trajectoire du système robotique sur la base d'un modèle de simulation.

7. Moyen de déplacement selon l'une quelconque des revendications précédentes, **caractérisé en ce que** la base (1) d'au moins un bras de robot du système robotique est solidaire à l'environnement ou mobile.

8. Moyen de déplacement selon la revendication précédente, **caractérisé en ce que** la base mobile est montée sur rail ou présente un train de roulement.

9. Moyen de déplacement selon l'une quelconque des revendications précédentes, **caractérisé par** une zone de débarquement pour monter et descendre du logement pour passager, qui présente une surface d'appui (210, 300), en particulier mobile, et/ou un dispositif de mise en prise (301) pouvant être relié, en particulier mécaniquement et/ou électriquement, au logement pour passager.

10. Moyen de déplacement selon l'une quelconque des revendications précédentes, **caractérisé en ce qu'**au moins un espace de travail (100, 200) de l'agencement d'espace de travail est prédéfini solidaire à l'environnement et/ou au moins un espace de travail de l'agencement d'espace de travail est prédéfini mobile.

11. Moyen de déplacement selon l'une quelconque des revendications précédentes, **caractérisé en ce que** le moyen de mémorisation (20) est aménagé pour la mémorisation d'une vitesse admissible à l'intérieur d'au moins un espace de travail de l'agencement d'espace de travail.

12. Moyen de déplacement selon l'une quelconque des revendications précédentes, **caractérisé en ce que** la distance déterminée présente une valeur et/ou une direction d'une distance minimum et/ou des composantes de distance dans au moins deux directions de l'espace par rapport à au moins un espace de travail de l'agencement d'espace de travail.

13. Moyen de déplacement selon l'une quelconque des revendications précédentes, **caractérisé en ce que** le moyen de sécurité (20) est aménagé pour réaliser un STOPO, STOP1 ou STOP2, si la distance déterminée et/ou au moins une composante de déplacement maximum admissible passe sous une valeur seuil prédéfinie.

14. Produit de programme informatique avec un code de programme, qui est enregistré sur un support (20) lisible par un ordinateur (20) pour la réalisation d'un procédé de fonctionnement d'un moyen de déplacement selon l'une quelconque des revendications précédentes, qui présente les étapes de :

   détermination de la distance entre le logement pour passager (12) et l'agencement d'espace de travail (100, 200) ; et
   détermination de la composante de déplacement maximum admissible dans les au moins deux directions de l'espace (x, y, z) en fonction de la distance déterminée.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1437162 A2
- DE 102012010856 A1